# EUROPEAN PATENT SPECIFICATION

(11) **EP 3 249 999 B1**
(45) Date of publication and mention of the grant of the patent: **31.03.2021**
(21) Application number: 15880699.2
(22) Date of filing: 03.02.2015
(51) Int. Cl.: H04W 88/02

(54) **INTELLIGENT MATCHING METHOD FOR FILTER AND TERMINAL**
INTELLIGENTES ABGLEICHVERFAHREN FÜR FILTER UND ENDGERÄT
PROCÉDÉ D'APPARIEMENT INTELLIGENT POUR FILTRE ET TERMINAL

(43) Date of publication of application: 29.11.2017
(73) Proprietor: Huawei Technologies Co., Ltd., Longgang District Shenzhen, Guangdong 518129 (CN)
(72) Inventor: HAO, Huaqi, Shenzhen Guangdong 518129 (CN); DAI, Yalu, Shenzhen Guangdong 518129 (CN)
(74) Representative: Epping - Hermann - Fischer
(86) International application number: PCT/CN2015/072149
(87) International publication number: WO 2016/123743

(56) References cited:
- CN-A- 103 533 241
- CN-A- 103 533 241
- CN-A- 103 916 597
- CN-A- 103 929 594
- CN-A- 104 092 942
- US-A1- 2014 300 776
- US-A1- 2015 002 696
- STOKMAN HARRO: "The Future of Smart Photography", IEEE MULTIMEDIA, IEEE SERVICE CENTER, NEW YORK, NY, US, vol. 21, no. 3, 1 July 2014 (2014-07-01), pages 66-71, XP011554480, ISSN: 1070-986X, DOI: 10.1109/MMUL.2014.46 [retrieved on 2014-07-22]

## Description

### TECHNICAL FIELD

The present invention relates to multimedia technologies, and in particular, to an intelligent filter matching method and a terminal.

### BACKGROUND

As a camera on a mobile terminal becomes more sophisticated, a photographing function of the mobile terminal allows people to easily record things around them at any time, and the photographing function of the mobile terminal can completely meet daily requirements. However, users have more requirements for photographing of a terminal. A mobile phone is used as an example. When people use a mobile phone for photographing, they always hope that a photographed photo can become a masterpiece, that is, people hope to add a most appropriate filter to a photo.

However, to complete a high-quantity artistic photo, a user always needs to experience a process in which filters are manually repeatedly selected and replaced, and even sometimes, it is difficult to select a filter. Therefore, human-machine interaction is not intelligent enough.

CN 103 533 241 discloses a photographing method of an intelligent filter. The photographing method comprises the following steps of driving a camera to capture data in real time, intelligently selecting the filter to perform real-time rendering according to current geographical position coordinates and a weather state, generating a preview image, and finally storing the preview image with an intelligently selected filter effect as a result image. According to the photographing method, the weather condition of the current position is considered, and geographical position information is also comprehensively considered; furthermore, the filter effect is intelligently selected, so that the photographing effect is better; great convenience is brought to non-professional photography users.

US 2014/0300776 A1 discloses a method and system for locating a picture, based on navigation functions of a mobile terminal. The method includes the follows. During a process of utilizing a photographic device to take a picture, current time information and geographical location information of current track point may be obtained and recorded by a mobile terminal, by using navigation functions carried by the mobile terminal. Picture shooting time carried by the picture taken and the time information obtained by the mobile terminal may be associated with each other, such that geographical location information where the picture is taken may be determined. Time of the photographic device is synchronous with time of the mobile terminal.

US 2015/0002696 A1 discloses a photographing method. The method includes: determining a photographed object in a viewing frame; obtaining characteristic information of the photographed object, where the characteristic information is used to indicate a type of the photographed object; analyzing a behavioral parameter of the photographed object and an environmental parameter in the viewing frame, where the behavioral parameter is used to indicate a behavior type and a behavior speed of the photographed object, and the environmental parameter is used to indicate a color condition and/or a light condition in the viewing frame; determining a photographing parameter that corresponds to the characteristic information, the behavioral parameter, and the environmental parameter; and photographing the photographed object according to the photographing parameter.

Stokman Harro: "The Future of Smart Photography", IEEE MULTIMEDIA, IEEE SERVICE CENTER, NEW YORK, NY, US, vol. 21, no. 3, 1 July 2014 (2014-07-01), pages 66-71, ISSN: 1070-986X, DOI: 10.1109/MMUL.2014.46 discusses the idea of smart photography (automatically improving or modifying an image based on visual concept detection, performed entirely on the camera on real time) and describes the Impala app, a real-world application developed by Euvision Technologies.

### SUMMARY

The present invention provides an intelligent filter matching method and a terminal, so as to resolve a prior-art technical problem that a user manually selects a filer and human-machine interaction is not intelligent enough.

The invention is defined by the appended claims. In the following, parts of the description and drawings referring to embodiments which are not covered by the claims are not presented as embodiments of the invention, but as examples useful for understanding the invention. According to a first aspect, an embodiment of the present invention provides an intelligent filter matching method, including:
collecting at least one first filter factor in a first photographing scenario in which a terminal is located, where the first filter factor includes at least one of the following factors: a geographic location, weather, auxiliary scenario information, a photographed object, or a photographing parameter;
selecting, according to a preset mapping relationship between a filter and a filter factor, a first filter that matches the first filter factor; and
determining, according to all determined first filters in the first photographing scenario, a target filter that has a highest matching degree with the first photographing scenario, and presenting the target filter to a user, where the target filter that has a highest matching degree with the first photographing scenario is a filter whose repetition rate is highest in all the first filters.

With reference to the first aspect, in a first possible implementation manner of the first aspect, when repetition rates of some first filters of all first filters in the first photographing scenario are the same, the determining, according to all determined first filters in the first photographing scenario, a target filter that has a highest matching degree with the first photographing scenario, and presenting the target filter to a user specifically includes:
determining, according to all determined first filters in the first photographing scenario and a preset priority policy, a target filter that has a highest matching degree with the first photographing scenario, and presenting the target filter to a user, where the priority policy includes a priority order of the at least one first filter factor; and
when a first filter that matches each first filter factor is the same and there is one first filter, determining, according to all determined first filters in the first photographing scenario, a second filter that has a highest matching degree with the first photographing scenario, and presenting the second filter to a user specifically includes:
   determining that the first filter is the second filter that has a highest matching degree with the first photographing scenario, and presenting the second filter to a user.

With reference to the first possible implementation manner of the first aspect, in a second possible implementation manner of the first aspect, the preset priority policy includes multiple priority policies; and the determining, according to all determined first filters in the first photographing scenario and a preset priority policy, a target filter that has a highest matching degree with the first photographing scenario specifically includes:
determining, according to characteristic information of the terminal, a priority policy that matches the characteristic information, where the characteristic information is used to indicate a service enabling state of the terminal, or an attribute of a location in which the terminal is located, or an attribute of a location enabling of the terminal; and
determining, according to the priority policy that matches the characteristic information and all determined first filters in the first photographing scenario, a target filter that has a highest matching degree with the first photographing scenario.

With reference to any one of the first aspect, or the first to the second possible implementation manners of the first aspect, in a third possible implementation manner of the first aspect, in the mapping relationship between the filter and the filter factor, each filter corresponds to at least one filter factor.

With reference to any one of the first aspect, or the first to the third possible implementation manners of the first aspect, in a fourth possible implementation manner of the first aspect, before the collecting at least one first filter factor in a first photographing scenario in which a terminal is located, the method further includes:
obtaining a filter factor set, where the filter factor set includes at least one filter factor;
dividing, according to a category of the filter factor, all filter factors in the filter factor set into M filter factor groups, and configuring a filter set for each filter factor group, where M is an integer greater than 0, and the filter set includes at least one filter; and
determining, according to the filter factor group and a filter set corresponding to the filter factor group, the mapping relationship between the filter and the filter factor.

With reference to the fourth possible implementation manner of the first aspect, in a fifth possible implementation manner of the first aspect, the filter set further includes a watermark that matches the filter.

With reference to any one of the first aspect, or the first to the fifth possible implementation manners of the first aspect, in a sixth possible implementation manner of the first aspect, if the user selects a second filter other than the target filter, after the determining, according to all determined first filters in the first photographing scenario and a preset priority policy, a target filter that has a highest matching degree with the first photographing scenario, the method further includes:
adding a mapping relationship between the second filter and the first photographing scenario to the preset mapping relationship between the filter and the filter factor.

According to a second aspect, an embodiment of the present invention provides a terminal, including:
a collection module, configured to collect at least one first filter factor in a first photographing scenario in which a terminal is located, where the first filter factor includes at least one of the following factors: a geographic location, weather, auxiliary scenario information, a photographed object, or a photographing parameter;
a selection module, configured to select, according to a preset mapping relationship between a filter and a filter factor, a first filter that matches the first filter factor; and
a processing module, configured to determine, according to all determined first filters in the first photographing scenario, a target filter that has a highest matching degree with the first photographing scenario, and present the target filter to a user, where the target filter that has a highest matching degree with the first photographing scenario is a filter whose repetition rate is highest in all the first filters. With reference to the second aspect, in a first possible implementation manner of the second aspect, when repetition rates of some first filters of all first filters in the first photographing scenario are the same, the processing module is specifically configured to determine, according to all determined first filters in the first photographing scenario and a preset priority policy, a target filter that has a highest matching degree with the first photographing scenario, and present the target filter to a user, where the priority policy includes a priority order of the at least one first filter factor; and when a first filter that matches each first filter factor is the same and there is one first filter, the processing module is further configured to determine that the first filter is the second filter that has a highest matching degree with the first photographing scenario, and present the second filter to a user.

With reference to the first possible implementation manner of the second aspect, in a second possible implementation manner of the second aspect, the preset priority policy includes multiple priority policies; and the processing module is specifically configured to determine, according to characteristic information of the terminal, a priority policy that matches the characteristic information, and determine, according to the priority policy that matches the characteristic information and all determined first filters in the first photographing scenario, a target filter that has a highest matching degree with the first photographing scenario, where the characteristic information is used to indicate a service enabling state of the terminal, or an attribute of a location in which the terminal is located, or an attribute of a location enabling of the terminal.

With reference to any one of the second aspect, or the first to the second possible implementation manners of the second aspect, in a third possible implementation manner of the second aspect, in the mapping relationship between the filter and the filter factor, each filter corresponds to at least one filter factor.

With reference to any one of the second aspect, or the first to the third possible implementation manners of the second aspect, in a fourth possible implementation manner of the second aspect, the terminal further includes:
an obtaining module, configured to obtain, before the collection module collects at least one first filter factor in the first photographing scenario in which the terminal is located, a filter factor set, where the filter factor set includes at least one filter factor;
a configuration module, configured to divide, according to a category of the filter factor, all filter factors in the filter factor set into M filter factor groups, and configure a filter set for each filter factor group, where M is an integer greater than 0, and the filter set includes at least one filter; and
a determining module, configured to determine, according to the filter factor group and a filter set corresponding to the filter factor group, the mapping relationship between the filter and the filter factor.

With reference to the fourth possible implementation manner of the second aspect, in a fifth possible implementation manner of the second aspect, the filter set further includes a watermark that matches the filter.

With reference to any one of the second aspect, or the first to the fifth possible implementation manners of the second aspect, in a sixth possible implementation manner of the second aspect, if the user selects a second filter other than the target filter, the processing module is further configured to: after the determining, according to all determined first filters in the first photographing scenario and a preset priority policy, a target filter that has a highest matching degree with the first photographing scenario, add a mapping relationship between the second filter and the first photographing scenario to the preset mapping relationship between the filter and the filter factor.

According to the intelligent filter matching method and the terminal provided in embodiments of the present invention, at least one first filter factor in a first photographing scenario in which a terminal is located is collected; a first filter that matches the first filter factor is determined according to a preset mapping relationship between a filter and a filter factor; and a target filter that has a highest matching degree with the first photographing scenario is determined according to all determined first filters in the first photographing scenario, and the target filter is presented to a user, thereby avoiding a manual operation by a user, enhancing intelligent performance of human-machine interaction, and improving user experience.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of Embodiment 1 of an intelligent filter matching method according to an embodiment of the present invention;
FIG. 2 is a schematic flowchart of Embodiment 2 of an intelligent filter matching method according to an embodiment of the present invention;
FIG. 3 is a schematic flowchart of Embodiment 3 of an intelligent filter matching method according to an embodiment of the present invention;
FIG. 4 is a schematic flowchart of Embodiment 4 of an intelligent filter matching method according to an embodiment of the present invention;
FIG. 5 is a schematic structural diagram of Embodiment 1 of a terminal according to an embodiment of the present invention;
FIG. 6 is a schematic structural diagram of Embodiment 2 of a terminal according to an embodiment of the present invention; and
FIG. 7 is a schematic structural diagram of a mobile phone according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A method related to the embodiments of the present invention is executed by a mobile terminal. The mobile terminal may be a communications device that has a photographing function, such as a mobile phone, a tablet computer, or a PDA (Personal Digital Assistant, Personal Digital Assistant). The method related to the embodiments of the present invention may be specifically used to resolve a prior-art technical problem that when a user performs photographing, a user needs to manually select a filter, and human-machine interaction is not intelligent enough.

Specific embodiments are used below to describe in detail the technical solutions of the present invention. The following several specific embodiments may be combined with each other, and a same or similar concept or process may not be described repeatedly in some embodiments.

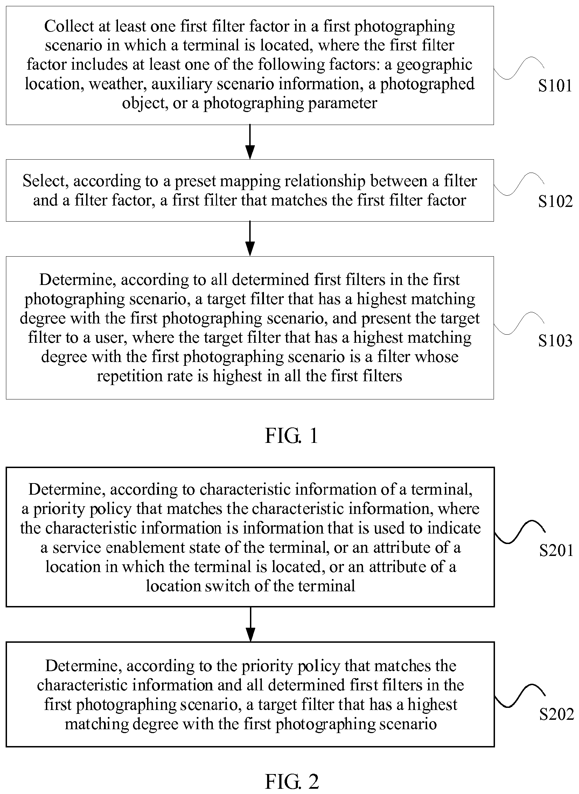

FIG. 1 is a schematic flowchart of Embodiment 1 of an intelligent filter matching method according to an embodiment of the present invention. As shown in FIG. 1, the method includes the following steps.

S101. Collect at least one first filter factor in a first photographing scenario in which a terminal is located, where the first filter factor includes at least one of the following factors: a geographic location, weather, auxiliary scenario information, a photographed object, or a photographing parameter.

Specifically, the terminal collects at least one first filter factor in the first photographing scenario in which the terminal is located. The first photographing scenario may be understood as a spatial photographing factor set that includes specific information, such as, a geographic location in which the terminal is currently located, weather information of the location, and whether a photographing is performed indoors, outdoors, or at night. Therefore, the terminal may collect, by using hardware or software integrated in the terminal or by a combination of software and hardware, at least one first filter factor in the first photographing scenario in which the terminal is located. The first filter factor may be understood as a factor that can affect filter selection of a user, that is, a reference factor used when a user selects a filter. Optionally, the first filter factor may include at least one of the following factors: a photographing geographic location, weather of a photographing location, auxiliary photographing scenario information, a photographed object, or a photographing parameter. The photographing parameter may be a photographing aperture, a shutter speed, exposure compensation, light sensitivity ISO, or the like; the foregoing auxiliary photographing scenario information may be an auxiliary scenario of a photographing location, such as indoors, outdoors, an aquarium, night, and day; and the photographed object may be a character, food, scenery, or the like.

S102. Select, according to a preset mapping relationship between a filter and a filter factor, a first filter that matches the first filter factor.

Specifically, the mapping relationship between the filter and the filter factor is preset in the terminal. The mapping relationship may be obtained after a processor in the terminal loads a corresponding program, may be built in a memory of the terminal by a user by using a user interface provided by the terminal, or may be obtained from an Internet in advance by the terminal by using corresponding application software. A manner of obtaining the mapping relationship between the filter and the filter factor in the terminal is not limited in this embodiment of the present invention. It should be noted that in the mapping relationship, multiple filters and multiple filter factors may be included. One filter may correspond to multiple different filter factors, and correspondingly, one filter factor may also correspond to multiple different filters; or a filter may be in one-to-one correspondence with a filter factor. A correspondence between a filter and a filter factor is not limited in this embodiment of the present invention.

After obtaining the foregoing first filter factor, the terminal may automatically select, according to the foregoing preset mapping relationship between the filter and the filter factor, the first filter that matches the first filter factor, that is, the terminal automatically selects, by using processing software or processing hardware in the terminal according to the foregoing preset mapping relationship between the filter and the filter factor, the first filter that matches the first filter factor. It should be noted that there may be one or more first filters.

S103. Determine, according to all determined first filters in the first photographing scenario, a target filter that has a highest matching degree with the first photographing scenario, and present the target filter to a user, where the target filter that has a highest matching degree with the first photographing scenario is a filter whose repetition rate is highest in all the first filters.

Specifically, after determining first filters that match all first filter factors in the foregoing first photographing scenario, the foregoing terminal determines a filter whose repetition rate is highest in these first filters; and the terminal determines a first filter whose repetition rate is highest as a target filter that has a highest matching degree with the first photographing scenario, and pushes, by using a corresponding display interface, the target filter to a user for use or selection.

It should be noted that, when multiple target filters are determined by the terminal, that is, repetition rates of some first filters of all first filters related to the foregoing first photographing scenario are the same, and these first filters whose repetition rates are the same may be used as target filters, and the target filters are pushed to a user by using a corresponding display interface, so that a user may select a target filter according to an actual situation. In this process, although multiple target filters are pushed by the terminal to a user, compared with the prior art, the target filters are screened, so that a user does not need to manually select all first filters related to the first photographing scenario one by one. In addition, the target filters are proactively recommended by the terminal to a user, thereby avoiding a manual operation by a user, enhancing intelligent performance of human-machine interaction, and improving user experience.

To better understand the technical solution related to this embodiment of the present invention, a simple example is used for detailed description herein.

It is assumed that a first photographing scenario in which a terminal is located is "photographing food outdoors in Hong Kong in sunny weather". The terminal may collect, by using corresponding software or hardware or by a combination of software and hardware, a first filter factor in the first photographing scenario. First filter factors collected by the terminal include Hong Kong, outdoors, food, and a sunny day. Optionally, the terminal may collect, by using a Global Positioning System (Global Positioning System, GPS for short) module, a factor that the terminal is currently in Hong Kong, may collect, by using weather application software, current weather of Hong Kong, may identify, by using object identification application software, that a currently photographed object is food, and may collect, by using the GPS module or a corresponding sensor, a factor that the terminal is currently located outdoors.

The terminal determines, according to a preset mapping relationship between a filter and a filter factor, that first filters that match "Hong Kong" are Filter 1 and Filter 2, first filters that match "outdoors" are Filter 3 and Filter 4, first filters that match "a sunny day" are Filter 2 and Filter 5, and a first filter that matches "food" is Filter 6. The terminal determines, according to the obtained first filters in the first photographing scenario (Filter 1, Filter 2, Filter 3, Filter 4, Filter 2, Filter 5, and Filter 6), that a repetition rate of Filter 2 is highest, and then determines that Filter 2 is a target filter and presents the target filter to a user. Therefore, a filter that is obtained by the user and that is recommended by the terminal is a filter that has a highest matching degree with a current first photographing scenario, thereby avoiding manual selection by the user, and enhancing intelligent performance of human-machine interaction.

According to the intelligent filter matching method provided in this embodiment of the present invention, at least one first filter factor in a first photographing scenario in which a terminal is located is collected; a first filter that matches the first filter factor is determined according to a preset mapping relationship between a filter and a filter factor; and a target filter that has a highest matching degree with the first photographing scenario (for example, a food filter) is determined according to all determined first filters in the first photographing scenario, and the target filter is presented to a user, thereby avoiding a manual operation by a user, enhancing intelligent performance of human-machine interaction, and improving user experience.

Based on the embodiment shown in the foregoing FIG. 1, as a possible implementation manner of an embodiment of the present invention, this embodiment relates to a specific process in which when a first filter that is determined by the foregoing terminal and that matches all first filter factors in a first photographing scenario is the same, and there is one first filter, a terminal determines a target filter. Further, S103 specifically includes: determining that the first filter is a target filter that has a highest matching degree with the first photographing scenario, and presenting the target filter to a user. In the foregoing mapping relationship that is between a filter and a filter factor and that is used for determining the first filter, each filter corresponds to at least one filter factor.

Specifically, two scenarios are mainly involved.

First scenario: When one first filter factor is collected by a terminal, and there is one first filter corresponding to the first filter factor, the terminal determines the first filter as a target filter (Because a repetition rate of the first filter is 100%, another filter does not exist, and it is equivalent to that a repetition rate of the another filter is 0).

Second scenario: When multiple first filter factors are collected by a terminal, a first filter corresponding to each first filter factor is the same, and there is one first filter, the terminal determines the first filter as a target filter (Because a repetition rate of the first filter is 100%, another filter does not exist, and it is equivalent to that a repetition rate of the another filter is 0).

Based on the embodiment shown in the foregoing FIG. 1, as another possible implementation manner of an embodiment of the present invention, this embodiment relates to a specific process in which a terminal determines a target filter when repetition rates of some first filters of all first filters in the first photographing scenario are the same. In the foregoing mapping relationship that is between a filter and a filter factor and that is used for determining the first filter, each filter corresponds to at least one filter factor. Further, S103 specifically includes: determining, according to all determined first filters in the first photographing scenario and a preset priority policy, a target filter that has a highest matching degree with the first photographing scenario, and presenting the target filter to a user, where the priority policy includes a priority order of the at least one first filter factor.

Specifically, after determining all first filters in the first photographing scenario, the terminal determines repetition rates of these first filters. When the terminal determines that repetition rates of one or more first filters of all first filters in the first photographing scenario are equal, to further enhance intelligent performance of human-machine interaction, the terminal further screens these first filters whose repetition rates are equal. Specifically, the terminal screens, according to the preset priority policy, these first filters whose repetition rates are equal, that is, a first filter whose priority is highest is determined according to the priority policy, so that the first filter is used as the target filter and presented to a user. The priority policy includes a priority order of the at least one first filter factor. For example, when a priority of "city" is higher than a priority of "weather", and the first filters whose repetition rates are equal are considered, a first filter that matches "city" needs to be preferentially considered.

Further, in this implementation manner, for a detailed execution process of S103, refer to Embodiment 2 shown in FIG. 2. The foregoing preset priority policy includes multiple priority policies. As shown in FIG. 2, the method includes the following steps.

S201. Determine, according to characteristic information of the terminal, a priority policy that matches the characteristic information, where the characteristic information is information that is used to indicate a service enabling state of the terminal, or an attribute of a location in which the terminal is located, or an attribute of a location enabling of the terminal.

Specifically, the characteristic information of the terminal may be information that is used to indicate the service enabling state of the terminal, for example, may be information that is used to indicate whether the terminal currently enables a data service or another service. Alternatively, the characteristic information may be information that is used to indicate the attribute of a location in which the terminal is located, for example, may be information that is used to indicate whether a city in which the terminal is currently located is a popular tourist city. Alternatively, the characteristic information may be information that is used to indicate the attribute of a location enabling of the terminal, for example, may be used to indicate whether a GPS function of the terminal is enabled, or the like.

The terminal may select, according to the characteristic information of the terminal, a priority policy that matches the characteristic information of the terminal in the preset priority policy. Optionally, the terminal may preset a correspondence between characteristic information and a priority policy in a memory, and the terminal may invoke, by using a corresponding program, the correspondence in the memory to determine a priority policy.

S202. Determine, according to the priority policy that matches the characteristic information and all determined first filters in the first photographing scenario, a target filter that has a highest matching degree with the first photographing scenario.

To better describe the technical solution of this embodiment a simple example is still used for description herein.

It is assumed that a first photographing scenario in which a terminal is located is "photographing food outdoors in Hong Kong in sunny weather". The terminal may collect, by using corresponding software or hardware or by a combination of software and hardware, a first filter factor in the first photographing scenario. First filter factors collected by the terminal include Hong Kong, outdoors, food, and a sunny day. Optionally, the terminal may collect, by using a GPS module, a factor that the terminal is currently in Hong Kong, may collect, by using weather application software, current weather of Hong Kong, may identify, by using object identification application software, that a currently photographed object is food, and may collect, by using the GPS module or a corresponding sensor, a factor that the terminal is currently located outdoors.

The terminal determines, according to a preset mapping relationship between a filter and a filter factor, that first filters that match "Hong Kong" are Filter 1 and Filter 8, first filters that match "a sunny day" are Filter 3 and Filter 6, first filters that match "food" are Filter 4, Filter 7, and Filter 8, and first filters that match "outdoors" are Filter 3, Filter 4, and Filter 7. Refer to the following Table 1.

**Table 1**

| **First filter factor** | **First filter** |
|---|---|
| Hong Kong | Filter 1 and Filter 8 |
| Sunny day | Filter 3 and Filter 6 |
| Food | Filter 4, Filter 7, and Filter 8 |
| Outdoors | Filter 3, Filter 4, and Filter 7 |

It can be learned from the foregoing Table 1 that first filters whose repetition rates are highest and that are determined by the terminal are: Filter 3, Filter 4, Filter 7, and Filter 8. Therefore, to further enhance intelligent performance of human-machine interaction, the terminal further screens, according to the preset priority policy, these first filters whose repetition rates are equal. It is assumed that the foregoing preset priority policy includes three priority policies, and the three priority policies are respectively are in a correspondence with different characteristic information. For details, refer to the following Table 2.

**Table 2**

| **Characteristic information** | **Priority policy** |
|---|---|
| Popular city | City > photographed object > weather > auxiliary scenario (indoors, outdoors, or the like) |
| Non-popular city or GPS disabled | Weather > photographed object > auxiliary scenario (indoors, outdoors, or the like) > city |
| Data service disabled | Photographed object > auxiliary scenario (indoors, outdoors, or the like) > city > weather |

Optionally, a filter database is preset in the terminal. The filter database may include a characteristic information set, and a terminal may learn, by using corresponding software, that the collected first filter factor matches a specific piece of characteristic information in the characteristic information set. Because the location in which the terminal is currently located is Hong Kong, the terminal may learn that characteristic information corresponding to Hong Kong is "popular city", and then the terminal determines, according to the characteristic information, the priority policy is "City > photographed object > weather > auxiliary scenario (indoor, outdoors, or the like)". Therefore, the terminal preferentially determines that Filter 8 is a target filter, and presents Filter 8 to a user. Therefore, a filter that is obtained by the user and that is recommended by the terminal is a filter that has a highest matching degree with a current first photographing scenario, thereby avoiding manual selection by the user, and enhancing intelligent performance of human-machine interaction.

It should be noted that the terminal may determine the characteristic information without the filter database. For example, the terminal may determine the characteristic information according to whether a GPS function is enabled or whether a data service is disabled. A specific manner for determining the characteristic information by the terminal is not limited in the present invention.

According to the intelligent filter matching method provided in this embodiment of the present invention, at least one first filter factor in a first photographing scenario in which a terminal is located is collected; a first filter that matches the first filter factor is determined according to a preset mapping relationship between a filter and a filter factor; and a target filter that has a highest matching degree with the first photographing scenario is determined according to all determined first filters in the first photographing scenario, and the target filter is presented to a user, thereby avoiding a manual operation by a user, enhancing intelligent performance of human-machine interaction, and improving user experience.

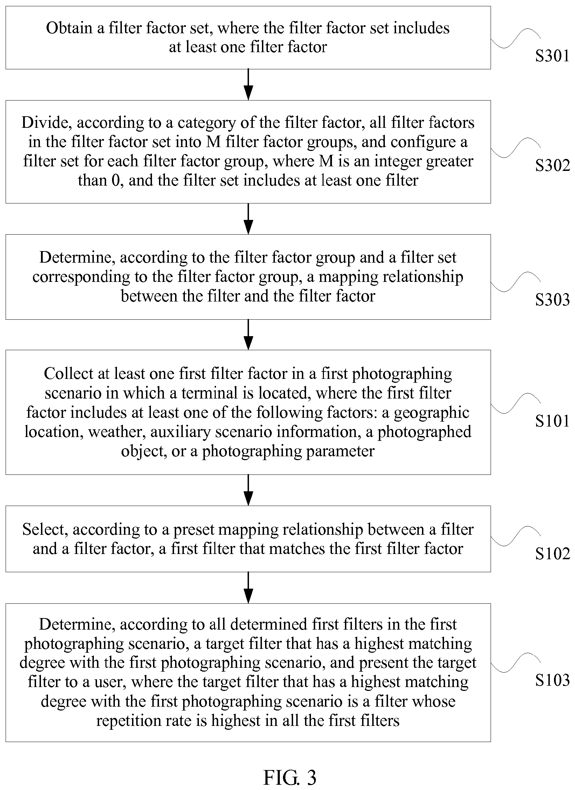

FIG. 3 is a schematic flowchart of Embodiment 3 of an intelligent filter matching method according to an embodiment of the present invention. A method related to this embodiment is a specific process in which a terminal determines a mapping relationship between a filter and a filter factor. Based on the foregoing embodiments, further, as shown in FIG. 3, before S101, the method further includes:
S301. Obtain a filter factor set, where the filter factor set includes at least one filter factor.

Specifically, a manner in which the terminal obtains the filter factor set may be as follows: before the terminal is delivered, the filter factor set is built in a memory of the terminal by using a corresponding fixture in a production line; or the terminal obtains a large quantity of filter factors on the Internet, and stores the filter factors in a memory to form a filter factor set. A manner in which the terminal obtains the filter factor set is not limited in this embodiment of the present invention.

Optionally, a filter factor included in the filter factor set obtained by the terminal may include various weather information, such as sunny, cloudy, overcast, cloudy to overcast, and rainy; may further include a location, for example, a photographing location such as a popular city (Beijing, Japan, Shanghai, Britain, United States, or the like) or a current GPS positioning city; may further include auxiliary scenario, such as indoors, outdoors, a night scene, an aquarium, or fireworks; and may further include a photographed object, such as food, a character, a plant, a still object, a building, a lake, a mountain, or a river.

S302. Divide, according to a category of the filter factor, all filter factors in the filter factor set into M filter factor groups, and configure a filter set for each filter factor group, where M is an integer greater than 0, and the filter set includes at least one filter.

Specifically, the terminal divides, according to the category of the filter factor, all filter factors in the foregoing obtained filter factor set into M filter factor groups; and the filter factors in the filter factor set may be divided, according to an example of a filter factor shown in S301, into four filter factor groups: a weather group, a city group, an auxiliary scenario group, and a photographed object group.

After determining the filter factor group, the terminal configures a filter set for each of the filter factor groups, where the filter set includes at least one filter, and optionally, each filter may further have a matching watermark.

S303. Determine, according to the filter factor group and a filter set corresponding to the filter factor group, a mapping relationship between the filter and the filter factor.

Specifically, the terminal may configure, according to a filter set corresponding to each of the foregoing filter factor groups, a filter factor corresponding to each filter for each filter, where one filter may correspond to at least one filter factor. For example, when a filter factor is configured for a filter in a filter set corresponding to the weather group, the terminal selects a matching filter factor only in a filter factor of the weather group, so as to ensure that a filter factor corresponding to each filter is relatively matched. It should be noted that some filters in filter sets corresponding to different filter factor groups may be the same. Therefore, one filter may correspond to various types of filter factors.

In conclusion, the terminal establishes a mapping relationship between a filter and a filter factor, so that the terminal determines, according to the mapping relationship between the filter and the filter factor, a first filter corresponding to a collected first filter factor in the first photographing scenario. It should be noted that, because the foregoing first filter factor is included in the foregoing filter factor set, the terminal may determine, according to the foregoing mapping relationship between the filter and the filter factor, a first filter corresponding to the first filter factor.

Optionally, according to the example shown in the foregoing embodiment, a photographing geographic location may be in Hong Kong, weather is sunny, auxiliary scenario information may be a scenario in Hong Kong, such as indoors, outdoors, an aquarium, night, or day; and a photographed object of the terminal may be food.

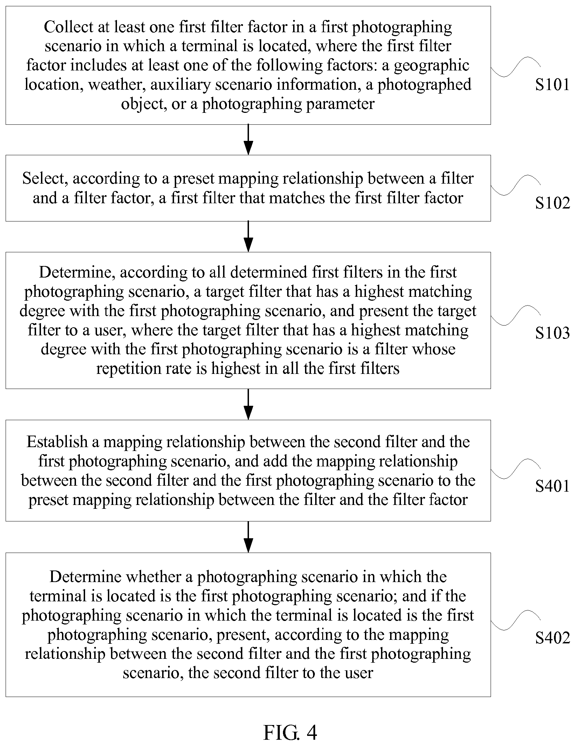

FIG. 4 is a schematic flowchart of Embodiment 4 of an intelligent filter matching method according to an embodiment of the present invention. A method related to this embodiment is a specific process in which a user selects a second filter other than a target filter, a terminal adaptively learns and updates a filter database, so that when the terminal is in a same photographing scenario again, a filter that is close to user experience is presented to a user. Based on the foregoing embodiments, further, after S103, the method further includes:
S401. Establish a mapping relationship between the second filter and the first photographing scenario, and add the mapping relationship between the second filter and the first photographing scenario to the preset mapping relationship between the filter and the filter factor.

Specifically, a user may perform photographing according to a target filter recommended by the terminal, and may manually select a second filter according to a habit. The terminal records the second filter selected by the user, establishes the mapping relationship between the second filter and the first photographing scenario, and adds the mapping relationship between the second filter and the first photographing scenario to the foregoing preset mapping relationship between the filter and the filter factor.

S402. Determine whether a photographing scenario in which the terminal is located is the first photographing scenario; and if the photographing scenario in which the terminal is located is the first photographing scenario, present, according to the mapping relationship between the second filter and the first photographing scenario, the second filter to the user.

Specifically, when determining that a scenario in which the terminal is located is the first photographing scenario again, the terminal may present, according to the mapping relationship between the second filter and the first photographing scenario, the second filter to a user, thereby further improving user operation experience, and enhancing intelligent performance of human-machine interaction. Optionally, the target filter may also be presented to the user.

In the intelligent filter matching method provided in this embodiment of the present invention, a second filter selected by a user is recorded; and when a terminal is located in a first photographing scenario again, the second filter is presented to a user, thereby further improving user operation experience, and enhancing intelligent performance of human-machine interaction.

Persons of ordinary skill in the art may understand that all or a part of the steps of the foregoing method embodiments may be implemented by a program instructing relevant hardware. The program may be stored in a computer readable storage medium. When the program runs, the steps of the foregoing method embodiments are performed. The foregoing storage medium includes any medium that can store program code, such as a ROM, a RAM, a disk, or an optical disc.

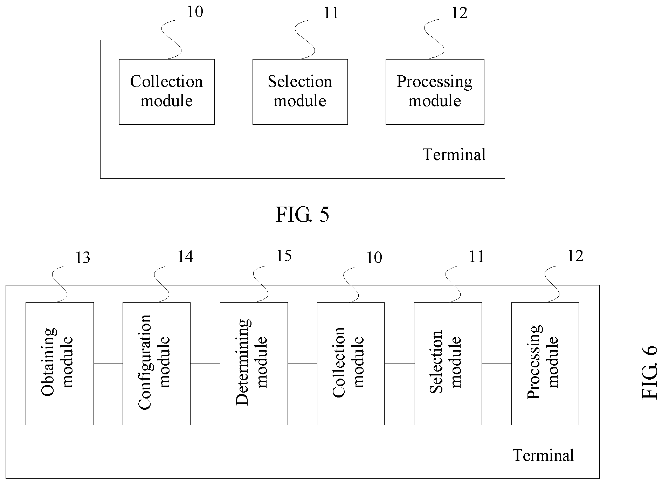

FIG. 5 is a schematic structural diagram of Embodiment 1 of a terminal according to an embodiment of the present invention. The terminal may be a communications device that has a photographing function, such as a mobile phone, a tablet computer, or a PDA. As shown in FIG. 5, the terminal includes a collection module 10, a selection module 11, and a processing module 12.

The collection module 10 is configured to collect at least one first filter factor in a first photographing scenario in which a terminal is located, where the first filter factor includes at least one of the following factors: a geographic location, weather, auxiliary scenario information, a photographed object, or a photographing parameter.

The selection module 11 is configured to select, according to a preset mapping relationship between a filter and a filter factor, a first filter that matches the first filter factor.

The processing module 12 is configured to determine, according to all determined first filters in the first photographing scenario, a target filter that has a highest matching degree with the first photographing scenario, and present the target filter to a user, where the target filter that has a highest matching degree with the first photographing scenario is a filter whose repetition rate is highest in all the first filters.

It should be noted that the foregoing collection module 10 may be various sensors, may be an App software capable of collection in the terminal, or may be another piece of hardware that integrates collection function software.

The terminal provided in this embodiment of the present invention can execute the foregoing method embodiments. Implementation principles and technical effects of the terminal are similar, and details are not described herein again.

Further, when repetition rates of some first filters of all first filters in the first photographing scenario are the same, the processing module 12 is specifically configured to determine, according to all determined first filters in the first photographing scenario and a preset priority policy, a target filter that has a highest matching degree with the first photographing scenario, and present the target filter to a user, where the priority policy includes a priority order of the at least one first filter factor.

Further, the preset priority policy includes multiple priority policies; and the processing module 12 is specifically configured to determine, according to characteristic information of the terminal, a priority policy that matches the characteristic information, and determine, according to the priority policy that matches the characteristic information and all determined first filters in the first photographing scenario, a target filter that has a highest matching degree with the first photographing scenario, where the characteristic information is used to indicate a service enabling state of the terminal, or an attribute of a location in which the terminal is located, or an attribute of a location enabling of the terminal.

Optionally, in the mapping relationship between the filter and the filter factor, each filter corresponds to at least one filter factor.

The terminal provided in this embodiment of the present invention can execute the foregoing method embodiments. Implementation principles and technical effects of the terminal are similar, and details are not described herein again.

FIG. 6 is a schematic structural diagram of Embodiment 2 of a terminal according to an embodiment of the present invention. Based on the embodiment shown in the foregoing FIG. 5, further, the foregoing terminal may further include an obtaining module 13, a configuration module 14, and a determining module 15.

The obtaining module 13 is configured to obtain, before the collection module 10 collects at least one first filter factor in the first photographing scenario in which the terminal is located, a filter factor set, where the filter factor set includes at least one filter factor.

The configuration module 14 is configured to divide, according to a category of the filter factor, all filter factors in the filter factor set into M filter factor groups, and configure a filter set for each filter factor group, where M is an integer greater than 0, and the filter set includes at least one filter.

The determining module 15 is configured to determine, according to the filter factor group and a filter set corresponding to the filter factor group, the mapping relationship between the filter and the filter factor.

Optionally, the foregoing filter set may further include a watermark that matches the filter.

Optionally, if the user selects a second filter other than the target filter, the processing module 12 is further configured to, after the determining, according to all determined first filters in the first photographing scenario and a preset priority policy, a target filter that has a highest matching degree with the first photographing scenario, add a mapping relationship between the second filter and the first photographing scenario to the preset mapping relationship between the filter and the filter factor.

The terminal provided in this embodiment of the present invention can execute the foregoing method embodiments. Implementation principles and technical effects of the terminal are similar, and details are not described herein again.

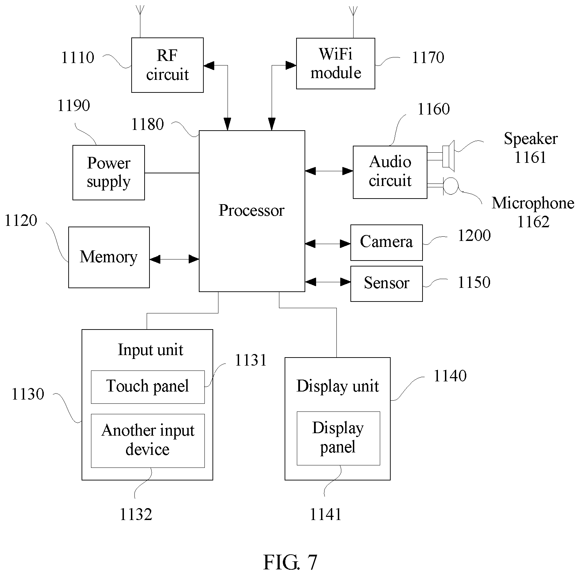

As described in the foregoing embodiment, a terminal related to an embodiment of the present invention may be a device that has a photographing function, such as a mobile phone, a tablet computer, or a PDA. Using a mobile terminal that is a mobile phone as an example, FIG. 7 shows a block diagram of a partial structure when a terminal is a mobile phone according to this embodiment of the present invention. Referring to FIG. 7, the mobile phone includes components such as a radio frequency (Radio Frequency, RF) circuit 1110, a memory 1120, an input unit 1130, a display unit 1140, a sensor 1150, an audio circuit 1160, a Wireless Fidelity (Wireless Fidelity, WiFi) module 1170, a processor 1180, and a power supply 1190. Persons skilled in the art may understand that the structure of the mobile phone shown in FIG. 7 imposes no limitation on the mobile phone, and the mobile phone may include more or less components than those shown in the figure, or may combine some components, or have different component arrangements.

The following provides detailed description of all the components of the mobile phone with reference to FIG. 7.

The RF circuit 1110 may be configured to receive and send information, or to receive and send a signal in a call process. In particular, after receiving downlink information of a base station, the RF circuit 1110 sends the downlink information to the processor 1180 for processing. In addition, the RF circuit 1110 sends uplink data to the base station. Generally, the RF circuit includes but is not limited to an antenna, at least one amplifier, a transceiver, a coupler, a low noise amplifier (Low Noise Amplifier, LNA), and a duplexer. In addition, the RF circuit 1110 may further communicate with a network and another device by means of radio communication. The foregoing radio communication may use any communications standard or protocol, including but not limited to a Global System of Mobile communication (Global System of Mobile communication, GSM), a General Packet Radio Service (General Packet Radio Service, GPRS), a Code Division Multiple Access (Code Division Multiple Access, CDMA), a Wideband Code Division Multiple Access (Wideband Code Division Multiple Access, WCDMA), Long Term Evolution (Long Term Evolution, LTE), an email, and a short messaging service (Short Messaging Service, SMS).

The memory 1120 may be configured to store a software program and a software module. By running the software program and the software module stored in the memory 1120, the processor 1180 executes various functions or applications and data processing of the mobile phone. The memory 1120 may mainly include a program storage area and a data storage area, where the program storage area may store an operating system, and an application program required by at least one function (such as an audio play function or an image play function), and the like; and the data storage area may store data created according to use of the mobile phone (such as audio data or a phonebook), and the like. In addition, the memory 1120 may include a high-speed random access memory, and may further include a non-volatile memory, for example, at least one disk storage device, a flash memory device, or another volatile solid-state storage device.

The input unit 1130 may be configured to receive entered digital or character information, and generate key signal inputs related to user setting and function control of the mobile phone 1100. Specifically, the input unit 1130 may include a touch panel 1131 and another input device 1132. The touch panel 1131 is also referred to as a touchscreen and may collect a touch operation performed by a user on or near the touch panel 1131 (such as an operation performed by a user on the touch panel 1131 or near the touch panel 1131 by using any proper object or accessory, such as a finger or a stylus), and drive a corresponding connected apparatus according to a preset program. Optionally, the touch panel 1131 may include two parts: a touch detection apparatus and a touch controller. The touch detection apparatus detects a touch position of a user, detects a signal brought by the touch operation, and sends the signal to the touch controller. The touch controller receives touch information from the touch detection apparatus, converts the touch information into touch point coordinates, sends the touch point coordinates to the processor 1180, and can receive and execute a command sent by the processor 1180. In addition, the touch panel 1131 may be implemented by using multiple types such as a resistive type, a capacitive type, an infrared ray, and a surface acoustic wave. In addition to the touch panel 1131, the input unit 1130 may further include another input device 1132. Specifically, the another input device 1132 may include but is not limited to one or more of a physical keyboard, a function key (such as a volume control key or an on/off key), a trackball, a mouse, a joystick.

The display unit 1140 may be configured to display information entered by the user or information provided for the user and various menus of the mobile phone. The display unit 1140 may include a display panel 1141. Optionally, the display panel 1141 may be configured in a form of a liquid crystal display (Liquid Crystal Display, LCD), an organic light-emitting diode (Organic Light-Emitting Diode, OLED), or the like. Further, the touch panel 1131 may cover the display panel 1141. When detecting a touch operation on or near the touch panel 1131, the touch panel 1131 transmits the touch operation to the processor 1180 to determine a type of a touch event, and then the processor 1180 provides a corresponding visual output on the display panel 1141 according to the type of the touch event. In FIG. 7, the touch panel 1131 and the display panel 1141 are used as two independent components to implement input and output functions of the mobile phone. However, in some embodiments, the touch panel 1131 and the display panel 1141 may be integrated to implement the input and output functions of the mobile phone.

The mobile phone may further include at least one sensor 1150, such as a light sensor, a motion sensor, or another sensor. Specifically, the light sensor may include an ambient light sensor and a proximity sensor, where the ambient light sensor may adjust luminance of the display panel 1141 according to brightness or dimness of ambient light, and the light sensor may turn off the display panel 1141 and/or backlight when the mobile phone moves to an ear. As a type of the motion sensor, an acceleration sensor may detect an acceleration value in each direction (generally three axes), and detect a value and a direction of gravity when the acceleration sensor is stationary, and may be applicable to an application used for identifying a mobile phone posture (for example, switching of a screen between a landscape orientation and a portrait orientation, a related game, or magnetometer posture calibration), a function related to vibration identification (such as a pedometer or a knock), and the like. Other sensors such as a gyroscope, a barometer, a hygrometer, a thermometer, and an infrared sensor may also be disposed on the mobile phone, and details are not described herein.

The audio circuit 1160, a speaker 1161, and a microphone 1162 may provide audio interfaces between the user and the mobile phone. The audio circuit 1160 may convert received audio data into an electrical signal, and transmit the electrical signal to the speaker 1161, and the speaker 1161 converts the electrical signal into a voice signal for output. In addition, the microphone 1162 converts a collected voice signal into an electrical signal, the audio circuit 1160 receives the electrical signal, converts the electrical signal into audio data, and outputs the audio data to the processor 1180 for processing, so as to send the audio data to, for example, another mobile phone, by using the RF circuit 1110, or output the audio data to the memory 1120 for further processing.

WiFi is a short-distance wireless transmission technology. The mobile phone may help, by using the WiFi module 1170, the user to receive and send an email, browse a web page, access streaming media, and the like. The WiFi module 1170 provides wireless broadband Internet access for the user. Although the WiFi module 1170 is shown in FIG. 7, it may be understood that the WiFi module is not a mandatory component of the mobile phone, and may be omitted as required without changing a scope of the essence of the present invention.

The processor 1180 is a control center of the mobile phone, and uses various interfaces and lines to connect all parts of the entire mobile phone. By running or executing a software program and/or a software module that is stored in the memory 1120 and invoking data stored in the memory 1120, the processor 1180 executes various functions and data processing of the mobile phone, so as to perform overall monitoring on the mobile phone. Optionally, one or more processing units may be integrated into the processor 1180. Preferably, an application processor and a modem processor may be integrated into the processor 1180, where the application processor mainly handles an operating system, a user interface, an application program, and the like; and the modem processor mainly handles radio communication. It may be understood that the foregoing modem processor may not be integrated into the processor 1180.

The mobile phone further includes the power supply 1190 (such as a battery) that supplies power to each component. Preferably, the power supply may be logically connected to the processor 1180 by using a power management system, so as to implement functions, such as management of charging, discharging, and power consumption, by using the power management system.

The mobile phone may further include a camera 1200. The camera may be a front-facing camera, or may be a rear-facing camera.

Although not shown, the mobile phone may further include a Bluetooth module, a GPS module, and the like, and details are not described herein.

In this embodiment of the present invention, the processor 1180 included in the mobile phone further includes the following functions:
collecting at least one first filter factor in a first photographing scenario in which a terminal is located, where the first filter factor includes at least one of the following factors: a geographic location, weather, auxiliary scenario information, a photographed object, or a photographing parameter;
selecting, according to a preset mapping relationship between a filter and a filter factor, a first filter that matches the first filter factor; and
determining, according to all determined first filters in the first photographing scenario, a target filter that has a highest matching degree with the first photographing scenario, and presenting the target filter to a user, where the target filter that has a highest matching degree with the first photographing scenario is a filter whose repetition rate is highest in all the first filters.

For a process in which when a terminal in this embodiment of the present invention is the foregoing mobile phone, the mobile phone pushes, to a user according to a collected first filter factor, a target filter that has a highest matching degree with a first photographing scenario, refer to detailed description of the foregoing embodiments of the intelligent filter matching method, and details are not described herein again.

Finally, it should be noted that the foregoing embodiments are merely intended for describing the technical solutions of the present invention, but not for limiting the present invention.

## Claims

1. An intelligent filter matching method, performed by a terminal, comprising :
collecting first filter factors in a first photographing scenario in which the terminal is located, wherein the first filter factors comprise the following factors: a geographic location, weather, auxiliary scenario information, a photographed object, and a photographing parameter, wherein the auxiliary scenario information comprises an auxiliary scenario of a photographing location, wherein the photographing parameter comprises a photographing aperture, a shutter speed, exposure compensation or light sensitivity ISO;
selecting, according to a preset mapping relationship between a filter and a filter factor, first filters that match the first filter factors; and
determining, according to all determined first filters in the first photographing scenario, a target filter that has a highest matching degree with the first photographing scenario, and presenting the target filter to a user, wherein the target filter that has a highest matching degree with the first photographing scenario is a filter whose repetition rate is highest in all the first filters.

2. The method according to claim 1, when repetition rates of some first filters of all first filters in the first photographing scenario are the same, the determining, according to all determined first filters in the first photographing scenario, a target filter that has a highest matching degree with the first photographing scenario, and presenting the target filter to a user specifically comprises:
determining, according to all determined first filters in the first photographing scenario and a preset priority policy, a target filter that has a highest matching degree with the first photographing scenario, and presenting the target filter to a user, wherein the priority policy comprises a priority order of the first filter factors.

3. The method according to claim 2, wherein the preset priority policy comprises multiple priority policies; and the determining, according to all determined first filters in the first photographing scenario and a preset priority policy, a target filter that has a highest matching degree with the first photographing scenario specifically comprises:
determining, according to characteristic information of the terminal, a priority policy that matches the characteristic information, wherein the characteristic information is used to indicate a service enabling state of the terminal, or an attribute of a location in which the terminal is located, or an attribute of a location enabling of the terminal; and
determining, according to the priority policy that matches the characteristic information and all determined first filters in the first photographing scenario, a target filter that has a highest matching degree with the first photographing scenario.

4. The method according to any one of claims 1 to 3, wherein in the mapping relationship between the filter and the filter factor, each filter corresponds to at least one filter factor.

5. The method according to any one of claims 1 to 4, before the collecting first filter factors in a first photographing scenario in which a terminal is located, the method further comprises:
obtaining a filter factor set, wherein the filter factor set comprises at least one filter factor;
dividing, according to a category of the filter factor, all filter factors in the filter factor set into M filter factor groups, and configuring a filter set for each filter factor group, wherein M is an integer greater than 0, and the filter set comprises at least one filter; and
determining, according to the filter factor group and a filter set corresponding to the filter factor group, the mapping relationship between the filter and the filter factor.

6. The method according to claim 5, wherein the filter set further comprises a watermark that matches the filter.

7. The method according to any one of claims 1 to 6, wherein if the user selects a second filter other than the target filter, after the determining, according to all determined first filters in the first photographing scenario and a preset priority policy, a target filter that has a highest matching degree with the first photographing scenario, the method further comprises:
adding a mapping relationship between the second filter and the first photographing scenario to the preset mapping relationship between the filter and the filter factor.

8. A terminal, comprising:
a collection module (10), configured to collect first filter factors in a first photographing scenario in which a terminal is located, wherein the first filter factors comprise the following factors: a geographic location, weather, auxiliary scenario information, a photographed object, and a photographing parameter, wherein the auxiliary scenario information comprises an auxiliary scenario of a photographing location, wherein the photographing parameter comprises a photographing aperture, a shutter speed, exposure compensation or light sensitivity ISO;
a selection module (11), configured to select, according to a preset mapping relationship between a filter and a filter factor, first filters that match the first filter factors; and
a processing module (12), configured to determine, according to all determined first filters in the first photographing scenario, a target filter that has a highest matching degree with the first photographing scenario, and present the target filter to a user, wherein the target filter that has a highest matching degree with the first photographing scenario is a filter whose repetition rate is highest in all the first filters.

9. The terminal according to claim 8, when repetition rates of some first filters of all first filters in the first photographing scenario are the same, the processing module is specifically configured to determine, according to all determined first filters in the first photographing scenario and a preset priority policy, a target filter that has a highest matching degree with the first photographing scenario, and present the target filter to a user, wherein the priority policy comprises a priority order of the first filter factors.

10. The terminal according to claim 9, wherein the preset priority policy comprises multiple priority policies; and the processing module is specifically configured to determine, according to characteristic information of the terminal, a priority policy that matches the characteristic information, and determine, according to the priority policy that matches the characteristic information and all determined first filters in the first photographing scenario, a target filter that has a highest matching degree with the first photographing scenario, wherein the characteristic information is used to indicate a service enabling state of the terminal, or an attribute of a location in which the terminal is located, or an attribute of a location enabling of the terminal.

11. The terminal according to any one of claims 8 to 10, wherein in the mapping relationship between the filter and the filter factor, each filter corresponds to at least one filter factor.

12. The terminal according to any one of claims 8 to 11, wherein the terminal further comprises:
an obtaining module (13), configured to obtain, before the collection module collects first filter factors in the first photographing scenario in which the terminal is located, a filter factor set, wherein the filter factor set comprises at least one filter factor;
a configuration module (14), configured to divide, according to a category of the filter factor, all filter factors in the filter factor set into M filter factor groups, and configure a filter set for each filter factor group, wherein M is an integer greater than 0, and the filter set comprises at least one filter; and
a determining module (15), configured to determine, according to the filter factor group and a filter set corresponding to the filter factor group, the mapping relationship between the filter and the filter factor.

13. The terminal according to claim 12, wherein the filter set further comprises a watermark that matches the filter.

14. The terminal according to any one of claims 8 to 13, wherein if the user selects a second filter other than the target filter, the processing module is further configured to: after the determining, according to all determined first filters in the first photographing scenario and a preset priority policy, a target filter that has a highest matching degree with the first photographing scenario, add a mapping relationship between the second filter and the first photographing scenario to the preset mapping relationship between the filter and the filter factor.

15. A computer-readable medium comprising instructions which, when executed by a computer of a terminal, cause the terminal to carry out the method according to any one of claims 1 to 7.

## Patentansprüche

1. Intelligentes Filterabgleichverfahren, das von einem Endgerät durchgeführt wird und Folgendes umfasst:
Sammeln von ersten Filterfaktoren in einem ersten Fotografieszenario, in dem sich das Endgerät befindet, wobei die ersten Filterfaktoren die folgenden Faktoren umfassen: einen geografischen Standort, Wetter, Szenariohilfsinformationen, ein fotografiertes Objekt und einen Fotografieparameter, wobei die Szenariohilfsinformationen ein Hilfsszenario eines Fotografiestandorts umfassen, wobei der Fotografieparameter eine Fotografieapertur, eine Verschlussgeschwindigkeit, Belichtungskompensation oder Lichtempfindlichkeit ISO umfassen;
Auswählen von ersten Filtern, die mit den ersten Filterfaktoren übereinstimmen, gemäß einer voreingestellten Zuordnungsbeziehung zwischen einem Filter und einem Filterfaktor und
Bestimmen eines Zielfilters, das einen höchsten Übereinstimmungsgrad mit dem ersten Fotografieszenario aufweist, gemäß allen bestimmten ersten Filtern im ersten Fotografieszenario und Präsentieren des Zielfilters für einen Benutzer, wobei das Zielfilter, das einen höchsten Übereinstimmungsgrad mit dem ersten Fotografieszenario aufweist, ein Filter ist, dessen Wiederholungsrate von allen ersten Filtern die höchste ist.

2. Verfahren nach Anspruch 1, wobei, wenn Wiederholungsraten von einigen ersten Filtern von allen ersten Filtern im ersten Fotografieszenario dieselben sind, das Bestimmen eines Zielfilters, das einen höchsten Übereinstimmungsgrad mit dem ersten Fotografieszenario aufweist, gemäß allen bestimmten ersten Filtern im ersten Fotografieszenario und das Präsentieren des Zielfilters für einen Benutzer speziell Folgendes umfasst:
Bestimmen eines Zielfilters, das einen höchsten Übereinstimmungsgrad mit dem ersten Fotografieszenario aufweist, gemäß allen bestimmten ersten Filtern im ersten Fotografieszenario und einer voreingestellten Prioritätsrichtlinie und Präsentieren des Zielfilters für einen Benutzer, wobei die Prioritätsrichtlinie eine Prioritätsreihenfolge der ersten Filterfaktoren umfasst.

3. Verfahren nach Anspruch 2, wobei die voreingestellte Prioritätsrichtlinie mehrere Prioritätsrichtlinien umfasst und das Bestimmen eines Zielfilters, das einen höchsten Übereinstimmungsgrad mit dem ersten Fotografieszenario aufweist, gemäß allen bestimmten ersten Filtern im ersten Fotografieszenario und einer voreingestellten Prioritätsrichtlinie speziell Folgendes umfasst:
Bestimmen einer Prioritätsrichtlinie, die mit charakteristischen Informationen übereinstimmt, gemäß den charakteristischen Informationen des Endgeräts, wobei die charakteristischen Informationen verwendet werden, um einen Dienstaktivierungszustand des Endgeräts oder ein Attribut eines Standorts, an dem sich das Endgerät befindet, oder ein Attribut einer Standortaktivierung des Endgeräts anzuzeigen; und
Bestimmen eines Zielfilters, das einen höchsten Übereinstimmungsgrad mit dem ersten Fotografieszenario aufweist, gemäß der Prioritätsrichtlinie, die mit den charakteristischen Informationen und allen bestimmten ersten Filtern im ersten Fotografieszenario übereinstimmt.

4. Verfahren nach einem der Ansprüche 1 bis 3, wobei bei der Zuordnungsbeziehung zwischen dem Filter und dem Filterfaktor jedes Filter mindestens einem Filterfaktor entspricht.

5. Verfahren nach einem der Ansprüche 1 bis 4, wobei das Verfahren vor dem Sammeln von ersten Filterfaktoren in einem ersten Fotografieszenario, in dem sich ein Endgerät befindet, ferner Folgendes umfasst:
Erhalten eines Filterfaktorsatzes, wobei der Filterfaktorsatz mindestens einen Filterfaktor umfasst;
Teilen aller Filterfaktoren im Filterfaktorsatz gemäß einer Kategorie des Filterfaktors in M Filterfaktorgruppen und Auslegen eines Filtersatzes für jede Filterfaktorgruppe, wobei M eine Ganzzahl größer als 0 ist und der Filtersatz mindestens ein Filter umfasst; und
Bestimmen der Zuordnungsbeziehung zwischen dem Filter und dem Filterfaktor gemäß der Filterfaktorgruppe und einem Filtersatz, der der Filterfaktorgruppe entspricht.

6. Verfahren nach Anspruch 5, wobei der Filtersatz ferner ein Wasserzeichen umfasst, das mit dem Filter übereinstimmt.

7. Verfahren nach einem der Ansprüche 1 bis 6, wobei das Verfahren, wenn der Benutzer nach dem Bestimmen eines Zielfilters, das einen höchsten Übereinstimmungsgrad mit dem ersten Fotografieszenario aufweist, gemäß allen bestimmten ersten Filtern im ersten Fotografieszenario und einer voreingestellten Prioritätsrichtlinie ein anderes zweites Filter als das Zielfilter auswählt, ferner Folgendes umfasst:
Hinzufügen einer Zuordnungsbeziehung zwischen dem zweiten Filter und dem ersten Fotografieszenario zur voreingestellten Zuordnungsbeziehung zwischen dem Filter und dem Filterfaktor.

8. Endgerät, das Folgendes umfasst:
ein Sammelmodul (10), das dazu ausgelegt ist, erste Filterfaktoren in einem ersten Fotografieszenario, in dem sich ein Endgerät befindet, zu sammeln, wobei die ersten Filterfaktoren die folgenden Faktoren umfassen: einen geografischen Standort, Wetter, Szenariohilfsinformationen, ein fotografiertes Objekt und einen Fotografieparameter, wobei die Szenariohilfsinformationen ein Hilfsszenario eines Fotografiestandorts umfassen, wobei der Fotografieparameter eine Fotografieapertur, eine Verschlussgeschwindigkeit, Belichtungskompensation oder Lichtempfindlichkeit ISO umfassen;
ein Auswahlmodul (11), das dazu ausgelegt ist, erste Filter, die mit den ersten Filterfaktoren übereinstimmen, gemäß einer voreingestellten Zuordnungsbeziehung zwischen einem Filter und einem Filterfaktor auszuwählen; und
ein Verarbeitungsmodul (12), das dazu ausgelegt ist, ein Zielfilter, das einen höchsten Übereinstimmungsgrad mit dem ersten Fotografieszenario aufweist, gemäß allen bestimmten ersten Filtern im ersten Fotografieszenario zu bestimmen und das Zielfilter einem Benutzer zu präsentieren, wobei das Zielfilter, das einen höchsten Übereinstimmungsgrad mit dem ersten Fotografieszenario aufweist, ein Filter ist, dessen Wiederholungsrate von allen ersten Filtern die höchste ist.

9. Endgerät nach Anspruch 8, wobei, wenn Wiederholungsraten von einigen ersten Filtern von allen ersten Filtern im ersten Fotografieszenario dieselben sind, das Verarbeitungsmodul speziell dazu ausgelegt ist, ein Zielfilter, das einen höchsten Übereinstimmungsgrad mit dem ersten Fotografieszenario aufweist, gemäß allen bestimmten ersten Filtern im ersten Fotografieszenario und einer voreingestellten Prioritätsrichtlinie zu bestimmen und das Zielfilter einem Benutzer zu präsentieren, wobei die Prioritätsrichtlinie eine Prioritätsreihenfolge der ersten Filterfaktoren umfasst.

10. Endgerät nach Anspruch 9, wobei die voreingestellte Prioritätsrichtlinie mehrere Prioritätsrichtlinien umfasst und das Verarbeitungsmodul speziell dazu ausgelegt ist, eine Prioritätsrichtlinie, die mit charakteristischen Informationen übereinstimmt gemäß den charakteristischen Informationen des Endgeräts zu bestimmen und gemäß der Prioritätsrichtlinie, die mit den charakteristischen Informationen und allen bestimmten ersten Filtern im ersten Fotografieszenario übereinstimmt, ein Zielfilter zu bestimmen, das einen höchsten Übereinstimmungsgrad mit dem ersten Fotografieszenario aufweist, wobei die charakteristischen Informationen verwendet werden, um einen Dienstaktivierungszustand des Endgeräts oder ein Attribut eines Standorts, an dem sich das Endgerät befindet, oder ein Attribut einer Standortaktivierung des Endgeräts anzuzeigen.

11. Endgerät nach einem der Ansprüche 8 bis 10, wobei bei der Zuordnungsbeziehung zwischen dem Filter und dem Filterfaktor jedes Filter mindestens einem Filterfaktor entspricht.

12. Endgerät nach einem der Ansprüche 8 bis 11, wobei das Endgerät ferner Folgendes umfasst:
ein Erhaltungsmodul (13), das dazu ausgelegt ist, bevor das Sammelmodul erste Filterfaktoren im ersten Fotografieszenario sammelt, in dem sich das Endgerät befindet, einen ersten Filterfaktorsatz zu erhalten, wobei der Filterfaktorsatz mindestens einen Filterfaktor umfasst;
ein Auslegungsmodul (14), das dazu ausgelegt ist, alle Filterfaktoren im Filterfaktorsatz gemäß einer Kategorie des Filterfaktors in M Filterfaktorgruppen zu teilen und einen Filtersatz für jede Filterfaktorgruppe auszulegen, wobei M eine Ganzzahl größer als 0 ist und der Filtersatz mindestens ein Filter umfasst; und
ein Bestimmungsmodul (15), das dazu ausgelegt ist, die Zuordnungsbeziehung zwischen dem Filter und dem Filterfaktor gemäß der Filterfaktorgruppe und einem Filtersatz, der der Filterfaktorgruppe entspricht, zu bestimmen.

13. Endgerät nach Anspruch 12, wobei der Filtersatz ferner ein Wasserzeichen umfasst, das mit dem Filter übereinstimmt.

14. Endgerät nach einem der Ansprüche 8 bis 13, wobei, wenn der Benutzer ein anderes zweites Filter als das Zielfilter auswählt, das Verarbeitungsmodul ferner zu Folgendem ausgelegt ist: nach dem Bestimmen eines Zielfilters, das einen höchsten Übereinstimmungsgrad mit dem ersten Fotografieszenario aufweist, gemäß allen bestimmten ersten Filtern im ersten Fotografieszenario und einer voreingestellten Prioritätsrichtlinie Hinzufügen einer Zuordnungsbeziehung zwischen dem zweiten Filter und dem ersten Fotografieszenario zu einer voreingestellten Zuordnungsbeziehung zwischen dem Filter und dem Filterfaktor.

15. Computerlesbares Medium, das Anweisungen umfasst, die, wenn sie von einem Computer eines Endgeräts ausgeführt werden, das Endgerät veranlassen, das Verfahren nach einem der Ansprüche 1 bis 7 umzusetzen.

## Revendications

1. Procédé d'appariement intelligent de filtre, réalisé par un terminal, comprenant :
la collecte de premiers facteurs de filtre dans un premier scénario de prise de vue dans lequel le terminal est localisé, les premiers facteurs de filtre comprenant les facteurs suivants : une localisation géographique, la météo, des informations de scénario auxiliaires, un objet photographié, et un paramètre de prise de vue, les informations de scénario auxiliaires comprenant un scénario auxiliaire d'une localisation de prise de vue, le paramètre de prise de vue comprenant une ouverture de prise de vue, une vitesse d'obturation, une compensation d'exposition ou une sensibilité à la lumière ISO ;
la sélection, en fonction d'une relation de mappage préréglée entre un filtre et un facteur de filtre, de premiers filtres qui sont appariés aux premiers facteurs de filtre ; et
la détermination, en fonction de tous les premiers filtres déterminés dans le premier scénario de prise de vue, d'un filtre cible qui a le degré d'appariement le plus élevé avec le premier scénario de prise de vue, et la présentation du filtre cible à un utilisateur, le filtre cible qui a le degré d'appariement le plus élevé avec le premier scénario de prise de vue étant un filtre dont le taux de répétition est le plus élevé parmi tous les premiers filtres.

2. Procédé selon la revendication 1, lorsque des taux de répétition de certains premiers filtres de tous les premiers filtres dans le premier scénario de prise de vue sont les mêmes, la détermination, en fonction de tous les premiers filtres déterminés dans le premier scénario de prise de vue, d'un filtre cible qui a le degré d'appariement le plus élevé avec le premier scénario de prise de vue, et la présentation du filtre cible à un utilisateur comprenant de manière spécifique :
la détermination, en fonction de tous les premiers filtres déterminés dans le premier scénario de prise de vue et d'une politique de priorité préréglée, d'un filtre cible qui a le degré d'appariement le plus élevé avec le premier scénario de prise de vue, et la présentation du filtre cible à un utilisateur, la politique de priorité comprenant un ordre de priorité des premiers facteurs de filtre.

3. Procédé selon la revendication 2, dans lequel la politique de priorité préréglée comprend de multiples politiques de priorité ; et la détermination en fonction de tous les premiers filtres déterminés dans le premier scénario de prise de vue et d'une politique de priorité préréglée, d'un filtre cible qui a le degré d'appariement le plus élevé avec le premier scénario de prise de vue comprend de manière spécifique :
la détermination, en fonction d'informations de caractéristiques du terminal, d'une politique de priorité qui est appariée aux informations de caractéristique, les informations de caractéristique étant utilisées pour indiquer un état d'activation de service du terminal, ou un attribut d'une localisation dans laquelle le terminal est localisé, ou un attribut d'une activation de localisation du terminal ; et
la détermination, en fonction de la politique de priorité qui est appariée aux informations de caractéristique et de tous les premiers filtres déterminés dans le premier scénario de prise de vue, d'un filtre cible qui a le degré d'appariement le plus élevé avec le premier scénario de prise de vue.

4. Procédé selon l'une quelconque des revendications 1 à 3, dans lequel dans la relation de mappage entre le filtre et le facteur de filtre, chaque filtre correspond à au moins un facteur de filtre.

5. Procédé selon l'une quelconque des revendications 1 à 4, avant la collecte de premiers facteurs de filtre dans un premier scénario de prise de vue dans lequel un terminal est localisé, le procédé comprenant en outre :
l'obtention d'un ensemble de facteurs de filtre, l'ensemble de facteurs de filtre comprenant au moins un facteur de filtre ;
la division, en fonction d'une catégorie du facteur de filtre, de tous les facteurs de filtre dans l'ensemble de facteurs de filtre en M groupes de facteurs de filtre, et la configuration d'un ensemble de filtres pour chaque groupe de facteurs de filtre, M étant un nombre entier supérieur à 0, et l'ensemble de filtres comprenant au moins un filtre ; et
la détermination, en fonction du groupe de facteurs de filtre et d'un ensemble de filtres correspondant au groupe de facteurs de filtre, de la relation de mappage entre le filtre et le facteur de filtre.

6. Procédé selon la revendication 5, dans lequel l'ensemble de filtres comprend en outre un filigrane qui est apparié au filtre.

7. Procédé selon l'une quelconque des revendications 1 à 6, dans lequel si l'utilisateur sélectionne un deuxième filtre autre que le filtre cible, après la détermination, en fonction de tous les premiers filtres déterminés dans le premier scénario de prise de vue et d'une politique de priorité préréglée, d'un filtre cible qui a le degré d'appariement le plus élevé avec le premier scénario de prise de vue, le procédé comprenant en outre :
l'ajout d'une relation de mappage entre le deuxième filtre et le premier scénario de prise de vue à la relation de mappage préréglée entre le filtre et le facteur de filtre.

8. Terminal, comprenant :
un module de collecte (10), configuré pour collecter des premiers facteurs de filtre dans un premier scénario de prise de vue dans lequel un terminal est localisé, les premiers facteurs de filtre comprenant les facteurs suivants : une localisation géographique, la météo, des informations de scénario auxiliaires, un objet photographié, et un paramètre de prise de vue, les informations de scénario auxiliaires comprenant un scénario auxiliaire d'une localisation de prise de vue, le paramètre de prise de vue comprenant une ouverture de prise de vue, une vitesse d'obturation, une compensation d'exposition ou une sensibilité à la lumière ISO ;
un module de sélection (11), configuré pour sélectionner, en fonction d'une relation de mappage préréglée entre un filtre et un facteur de filtre, des premiers filtres qui sont appariés aux premiers facteurs de filtre ; et
un module de traitement (12), configuré pour déterminer, en fonction de tous les premiers filtres déterminés dans le premier scénario de prise de vue, un filtre cible qui a le degré d'appariement le plus élevé avec le premier scénario de prise de vue, et pour présenter le filtre cible à un utilisateur, le filtre cible qui a le degré d'appariement le plus élevé avec le premier scénario de prise de vue étant un filtre dont le taux de répétition est le plus élevé parmi tous les premiers filtres.

9. Terminal selon la revendication 8, lorsque des taux de répétition de certains premiers filtres de tous les premiers filtres dans le premier scénario de prise de vue sont les mêmes, le module de traitement est configuré de manière spécifique pour déterminer, en fonction de tous les premiers filtres déterminés dans le premier scénario de prise de vue et d'une politique de priorité préréglée, un filtre cible qui a le degré d'appariement le plus élevé avec le premier scénario de prise de vue, et pour présenter le filtre cible à un utilisateur, la politique de priorité comprenant un ordre de priorité des premiers facteurs de filtre.

10. Terminal selon la revendication 9, dans lequel la politique de priorité préréglée comprend de multiples politiques de priorité ; et le module de traitement est configuré de manière spécifique pour déterminer, en fonction d'informations de caractéristique du terminal, une politique de priorité qui est appariée aux informations de caractéristique, et pour déterminer, en fonction de la politique de priorité qui est appariée aux informations de caractéristique et de tous les premiers filtres déterminés dans le premier scénario de prise de vue, un filtre cible qui le degré d'appariement le plus élevé avec le premier scénario de prise de vue, les informations de caractéristique étant utilisées pour indiquer un état d'activation de service du terminal, ou un attribut d'une localisation dans laquelle le terminal est localisé, ou un attribut d'une activation de localisation du terminal.

11. Terminal selon l'une quelconque des revendications 8 à 10, dans lequel dans la relation de mappage entre le filtre et le facteur de filtre, chaque filtre correspond à au moins un facteur de filtre.

12. Terminal selon l'une quelconque des revendications 8 à 11, le terminal comprenant en outre :
un module d'obtention (13), configuré pour obtenir, avant que le module de collecte ne collecte des premiers facteurs de filtre dans le premier scénario de prise de vue dans lequel le terminal est localisé, un ensemble de facteurs de filtre, l'ensemble de facteurs de filtre comprenant au moins un facteur de filtre ;
un module de configuration (14), configuré pour diviser, en fonction d'une catégorie du facteur de filtre, tous les facteurs de filtre dans l'ensemble de facteurs de filtre en M groupes de facteurs de filtre, et pour configurer un ensemble de filtres pour chaque groupe de facteurs de filtre, M étant un nombre entier supérieur à 0, et l'ensemble de filtres comprenant au moins un filtre ; et
un module de détermination (15), configuré pour déterminer, en fonction du groupe de facteurs de filtre et d'un ensemble de filtres correspondant au groupe de facteurs de filtre, la relation de mappage entre le filtre et le facteur de filtre.

13. Terminal selon la revendication 12, dans lequel l'ensemble de filtres comprend en outre un filigrane qui est apparié au filtre.

14. Terminal selon l'une quelconque des revendications 8 à 13, dans lequel si l'utilisateur sélectionne un deuxième filtre autre que le filtre cible, le module de traitement est configuré en outre pour : après la détermination, en fonction de tous les premiers filtres déterminés dans le premier scénario de prise de vue et d'une politique de priorité préréglée, d'un filtre cible qui a le degré d'appariement le plus élevé avec le premier scénario de prise de prise, ajouter une relation de mappage entre le deuxième filtre et le premier scénario de prise de vue à la relation de mappage préréglée entre le filtre et le facteur de filtre.

15. Support lisible par ordinateur comprenant des instructions qui, lors de leur exécution par un ordinateur d'un terminal, amènent le terminal à réaliser le procédé selon l'une quelconque des revendications 1 à 7.
